(19) Europäisches Patentamt
European Patent Office
Office européen des brevets

(11) EP 3 119 835 B1

(12) **FASCICULE DE BREVET EUROPEEN**

(45) Date de publication et mention de la délivrance du brevet:
**22.04.2020 Bulletin 2020/17**

(21) Numéro de dépôt: **15719772.4**

(22) Date de dépôt: **17.03.2015**

(51) Int Cl.:
*C08G 71/00* (2006.01) *C08G 18/69* (2006.01)
*C08G 71/04* (2006.01) *C08G 18/48* (2006.01)
*C08G 18/10* (2006.01) *C09J 175/08* (2006.01)

(86) Numéro de dépôt international:
**PCT/FR2015/050638**

(87) Numéro de publication internationale:
**WO 2015/140458 (24.09.2015 Gazette 2015/38)**

(54) **PRÉPOLYMÈRE DE POLYURÉTHANE À TERMINAISONS CYCLOCARBONATE DE FAIBLE VISCOSITÉ ET SON UTILISATION DANS LA FABRICATION D'UNE COMPOSITION ADHÉSIVE MULTICOMPOSANT**

POLYURETHAN-PREPOLYMER MIT NIEDRIGER VISKOSITÄT MIT CYCLISCHEN CARBONATENDGRUPPEN UND VERWENDUNG DAVON BEI DER HERSTELLUNG EINER MEHRKOMPONENTIGEN KLEBSTOFFZUSAMMENSETZUNG

LOW-VISCOSITY POLYURETHANE PREPOLYMER WITH CYCLIC CARBONATE END GROUPS AND THE USE THEREOF IN THE PRODUCTION OF A MULTI-COMPONENT ADHESIVE COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.03.2014 FR 1452276**

(43) Date de publication de la demande:
**25.01.2017 Bulletin 2017/04**

(73) Titulaire: **Bostik SA**
**92700 Colombes (FR)**

(72) Inventeurs:
- **MICHAUD, Guillaume**
**60200 Compiègne (FR)**
- **PEREIRA, Marjorie**
**60400 Pontoise Les Noyon (FR)**
- **SIMON, Frédéric**
**60400 Pont L'évèque (FR)**

(74) Mandataire: **Chahine, Audrey Claire et al**
**ARKEMA France**
**Département Propriété Industrielle**
**420, rue d'Estienne d'Orves**
**92705 Colombes Cedex (FR)**

(56) Documents cités:
**JP-A- 2008 001 789**
**JP-A- 2008 285 538**
**JP-A- 2008 285 539**
**JP-A- 2008 291 143**
**JP-A- 2009 155 407**
**JP-A- 2009 173 919**
**JP-A- 2010 126 565**
**US-A1- 2003 070 741**
**US-A1- 2007 151 666**
**US-A1- 2009 286 919**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention concerne un prépolymère de polyuréthane à terminaisons cyclocarbonate ((2-oxo-1,3-dioxolan-4-yl)méthyl-carbamate)) (PP2) de faible viscosité, son procédé de préparation, et son utilisation dans la fabrication d'une composition adhésive.

L'invention concerne également un système multicomposant comprenant au moins :

- comme premier composant (noté composant A), une composition comprenant au moins un prépolymère de polyuréthane à terminaisons cyclocarbonate (PP2) selon l'invention et
- comme deuxième composant (noté composant B), une composition comprenant au moins un durcisseur comportant au moins deux groupes amines primaires $NH_2$ (B1).

L'invention concerne également un procédé d'assemblage de matériaux par collage, mettant en œuvre au moins un prépolymère de polyuréthane à terminaisons cyclocarbonate (PP2) selon l'invention.

On connait depuis longtemps des compositions adhésives (de colle ou mastic), à base de polyuréthane, notamment sous la forme de systèmes multicomposants (généralement bicomposants) dans lesquels les (deux) composants réactifs nécessaires à la synthèse du polyuréthane sont stockés de manière séparée, et mélangés au dernier moment avant utilisation de la composition adhésive.

Pour qu'un tel système soit correctement mis en œuvre, les composants réactifs doivent présenter d'une part une réactivité suffisante pour que la réaction ait lieu et s'opère rapidement, et d'autre part une viscosité adaptée à la température de mélange pour que celui-ci s'opère aisément.

Traditionnellement, la synthèse d'un polyuréthane a lieu par une réaction de polyaddition entre un polyol et un polyisocyanate.

Toutefois, les polyisocyanates sont des composés très sensibles en présence d'humidité atmosphérique et nécessitent de prendre des mesures appropriées pour éviter leur réticulation prématurée, et donc leur perte de réactivité, au cours de leur manipulation et de leur stockage (conditions anhydres). De plus, certains de ces composés, tels que l'hexaméthylène diisocyanate (HDI), l'isophorone diisocyanate (IPDI), le toluène diisocyanate (TDI) ou le diisocyanate de diphényle méthane (MDI), désignés par le terme de « monomère diisocyanate » dans le reste de la présente demande, sont connus comme présentant des risques toxicologiques pour l'homme et l'environnement, et peuvent même générer des émissions toxiques pour les plus volatiles.

L'utilisation et le stockage de grande quantité de tels polyisocyanates est donc à éviter car cela nécessite de mettre en place des dispositifs de sécurité complexes et coûteux adaptés à leur utilisation et leur stockage. En particulier, on souhaite éviter d'avoir recours à de tels composés lors de la dernière étape de synthèse du polyuréthane, afin de pouvoir mettre à disposition du public des compositions adhésives à base de polyuréthane sous forme de systèmes multicomposants, plus respectueux de l'homme et son environnement et plus stable au stockage.

On connait de la demande de brevet US 2007/0151666 des compositions de colle ou de mastic sous forme de système bicomposant, obtenues par mélange d'un composant A comprenant au moins deux groupes cyclocarbonate avec un composant B comprenant au moins deux groupes amine primaire et/ou secondaire. Le composant A peut-être entre autre un prépolymère comportant des groupes ester ou isocyanate fonctionnalisés par du carbonate de glycérol. En particulier, les exemples illustrent des compositions de colle ou mastic comprenant un poly(hydroxyuréthane-uréthane) dans lesquels le composant A est un prépolymère ou mélange de prépolymères de polyuréthane fonctionnalisé par du carbonate de glycérol.

Bien que ces compositions présentent l'avantage de ne pas utiliser de polyisocyanate lors du mélange des composants A et B, elles présentent l'inconvénient de mettre en œuvre un composant A très visqueux voire solide à basse température, devant soit être chauffé à une température d'au moins 125°C susceptible d'entrainer une dégradation thermique du composant, soit être solubilisé dans une grande quantité de solvant (environ 50% en poids d'acétate d'éthyle dans les exemples) pour pouvoir être suffisamment liquide pour que puisse s'opérer le mélange avec le composé B. A défaut, le mélange risque de prendre en masse et mettre hors service les lignes de production. L'utilisation de telles conditions opératoires est toutefois peu souhaitable lorsqu'on désire mettre au point un procédé de préparation économique, rapide à mettre en œuvre et respectueux de l'homme et de l'environnement.

Un mauvais mélange des composés A et B peut également conduire à un produit ne présentant plus les propriétés et performances recherchées.

En outre, lorsqu'on désire formuler des compositions sous forme de kit transportable, pratique, facile et rapide à mettre en œuvre à la demande (« Do It Yourself »), le mélange des réactifs doit pouvoir se faire autant que possible sur des volumes restreints et à basse température, notamment à température ambiante.

Ainsi, les compositions de colle ou de mastic sous forme de système bicomposant existant à base de poly(hydroxyuréthane-uréthane) ne donnent pas entière satisfaction et restent à améliorer.

Par conséquent, il existe un besoin de mettre à disposition des compositions adhésives à base de polyuréthane,

n'employant pas, d'une part, de polyisocyanate comme réactif de fin de synthèse du polyuréthane, et notamment de monomère diisocyanate potentiellement toxique à la dernière étape de synthèse du polyuréthane, et permettant, d'autre part, de remédier aux inconvénients de l'art antérieur, tout en conservant des propriétés adhésives satisfaisantes.

Il existe également un besoin de formuler des compositions à base de polyuréthane, disponibles sous forme de système multicomposants et notamment bicomposants, qui soient plus faciles à préparer comparativement à l'art antérieur, par exemple à une température de mélange inférieure à 95°C, de préférence inférieure ou égale à 80°C, plus préférentiellement inférieure ou égale à 60°C, et mieux encore proche de la température ambiante (23°C).

En particulier, il existe un besoin de trouver des compositions disponibles sous forme de systèmes multicomposants, notamment transportables (kits), respectueuses de l'homme et de l'environnement.

En particulier, il existe un besoin de mettre à disposition des systèmes multicomposants dont la mise en œuvre conduit à des compositions adhésives, notamment des compositions de colle ou de mastic, présentant des propriétés adhésives satisfaisantes.

Il existe également un besoin de mettre à disposition des systèmes multicomposants dont la mise en œuvre conduit à des compositions adhésives, notamment des compositions de colle ou de mastic, présentant des performances mécaniques (par exemple élongation et/ou module) adaptées à l'utilisation de la composition adhésive.

Il existe en outre un besoin de mettre au point un procédé de préparation de telles compositions adhésives, qui soit économique, rapide à mettre en œuvre, et respectueux de l'homme et de l'environnement. Il est recherché notamment un procédé de préparation de telles compositions peu coûteux en énergie et ne mettant pas en œuvre de grande quantité de solvant contrairement aux procédés de préparation existant.

De manière surprenante, il a été trouvé que la réaction d'un prépolymère de polyuréthane à terminaisons NCO particulier avec du carbonate de glycérol, dans des conditions particulières, permet d'obtenir un prépolymère de polyuréthane à terminaisons cyclocarbonate peu visqueux à basse température, notamment à une température inférieure à 95°C, de préférence inférieure ou égale à 80°C, plus préférentiellement inférieure ou égale à 60°C, et mieux encore proche de la température ambiante (allant de 15 à 35°C), permettant ainsi de formuler aisément dans de telles conditions, notamment sans l'aide de solvant, une composition présentant des propriétés adhésives satisfaisantes, disponible sous forme de système multicomposant.

La présente invention a donc pour objet en premier lieu un prépolymère de polyuréthane à terminaisons (2-oxo-1,3-dioxolan-4-yl)méthyl-carbamate (PP2) susceptible d'être obtenu par un procédé de préparation selon l'invention, tel que défini dans l'un quelconque des paragraphes ci-dessous.

Il a été observé que le prépolymère de polyuréthane à terminaisons cyclocarbonate (PP2) ainsi obtenu par fonctionnalisation complète des groupes NCO d'un prépolymère de polyuréthane à terminaison NCO (PP1), présente une viscosité, mesurée à température égale, plus faible comparativement aux prépolymères de polyuréthane fonctionnalisés par du carbonate de glycérol, divulgués dans l'art antérieur, permettant ainsi de formuler aisément et rapidement à une température de mélange T3 inférieure à 95°C, de préférence inférieure ou égale à 80°C, plus préférentiellement inférieure ou égale à 60°C et mieux encore proche de la température ambiante (allant de 15 à 35°C), une composition adhésive sans solvant, sous forme de système multicomposant.

Il a été observé par ailleurs qu'en utilisant le prépolymère de polyuréthane à terminaisons cyclocarbonate (PP2) selon l'invention, on pouvait fabriquer des compositions adhésives sans solvant présentant de bonnes propriétés de mouillabilité et de bonnes performances mécaniques, adaptée au revêtement de surface, et des propriétés adhésives satisfaisantes pour l'assemblage par collage d'au moins deux matériaux.

La présente invention a pour objet en second lieu un procédé de préparation d'un tel prépolymère de polyuréthane à terminaisons (2-oxo-1,3-dioxolan-4-yl)méthyl-carbamate (PP2) comprenant :

- dans une première étape (notée E1), la préparation d'un prépolymère de polyuréthane à terminaisons NCO (PP1) par une réaction de polyaddition :

  (i) d'au moins un diisocyanate choisi parmi les diisocyanates aliphatiques ou aromatiques suivants, et leurs mélanges :

    a1) l'isophorone diisocyanate (IPDI),
    a2) le 2,4-toluène diisocyanate (2,4-TDI),
    a3) le 2,4'-diisocyanate de diphénylemethane (2,4'-MDI),

  (ii) avec au moins un polyol choisi parmi les polyéther polyols et les polydiène polyols, à une température de réaction T1 inférieure à 95°C, dans des conditions anhydres, et dans des quantités de diisocyanate et de polyol conduisant à un rapport molaire NCO/OH, noté $r_1$, allant de 1,6 à 1,9 ; puis

- dans une deuxième étape (notée E2), la réaction, dans des conditions anhydres, à une température de réaction T2

inférieure à 95°C du produit formé à la première étape (E1) avec au moins un carbonate de glycérol en une quantité telle que l'ensemble des groupes NCO présents dans le milieu réactionnel à l'issue de l'étape E1 réagissent en présence du carbonate de glycérol. On utilise une quantité de carbonate de glycérol conduisant à un rapport molaire NCO/OH, noté $r_2$, allant de 0,9 à 1,0, de préférence de 0,95 à 1,0.

La présente invention a pour objet en troisième lieu un système multicomposant, de préférence sans solvant, comprenant :

- comme premier composant (noté composant A), une composition comprenant au moins un prépolymère de polyuréthane à terminaisons cyclocarbonate (PP2) selon l'invention et
- comme deuxième composant (noté composant B), une composition comprenant au moins un durcisseur comportant au moins deux groupes amines primaires $NH_2$ (noté durcisseur aminé (B1)).

La présente invention a également pour objet en quatrième lieu l'utilisation du prépolymère de polyuréthane à terminaisons cyclocarbonate (PP2) selon l'invention pour la fabrication d'une composition adhésive (colle ou mastic), notamment sans solvant.

La présente invention a également pour objet en cinquième lieu un procédé d'assemblage de matériaux par collage mettant en œuvre au moins un prépolymère de polyuréthane à terminaisons cyclocarbonate (PP2) selon l'invention.

D'autres objets et caractéristiques de la présente invention apparaîtront plus clairement à la lecture de la description et des exemples.

Dans la présente demande, en l'absence d'indication contraire :

- les quantités exprimées sous la forme de pourcentage correspondent à des pourcentages poids/poids ;
- par groupe cyclocarbonate, on entend désigner le groupe (2-oxo-1,3-dioxolan-4-yl)méthyl-carbamate), c'est-à-dire un groupe monovalent répondant à la formule suivante :

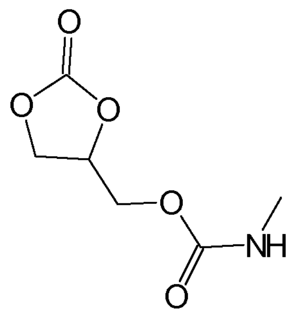

;

- les masses molaires moyennes en nombre, exprimées en gramme par mole (g/mol) sont déterminées par calcul par l'analyse de la teneur en groupes terminaux (NCO, OH et cyclocarbonate) exprimée en milliéquivalent par gramme (méq/g) et la fonctionnalité (nombre de fonction NCO, OH ou cyclcocarbonate par mole) du composé considéré (prépolymère de polyuréthane à terminaisons NCO (PP1), polyol, carbonate de glycérol ou prépolymère de polyuréthane à terminaisons cyclocarbonate (PP2) respectivement).
- par « prépolymère de polyuréthane », on désigne un intermédiaire de synthèse d'un polyuréthane, correspondant à un polymère comprenant dans sa chaîne principale au moins deux groupes uréthane et au moins deux fonctions réactives (par exemple isocyanate ou cyclocarbonate) lui permettant de subir au moins une réaction de polyaddition. Un tel prépolymère de polyuréthane est susceptible d'être obtenu par réaction de polyaddition d'au moins un polyol avec au moins un polyisocyanate.

En particulier, on désigne par « prépolymère de polyuréthane à terminaisons NCO », un prépolymère de polyuréthane comprenant au moins deux groupes isocyanate (NCO) lui permettant de subir une réaction de polyaddition en présence d'un cyclocarbonate (carbonate de glycérol). Un tel prépolymère de polyuréthane à terminaisons NCO est susceptible d'être obtenu par réaction de polyaddition d'au moins un polyol avec un excès stoechiométrique de polyisocyanate(s). Cet excès stoechiométrique peut être traduit par un rapport molaire NCO/OH strictement supérieur à 1, qui correspond au rapport molaire du nombre de groupes isocyanates (NCO) sur le nombre de groupes hydroxyles (OH) portés par les espèces porteuses de telles fonctions présentes dans le milieu réactionnel de la préparation du polyuréthane. Dans le procédé de préparation du prépolymère de polyuréthane à terminaisons NCO (PP1) de l'invention, ce

rapport est noté r1.

En particulier, on désigne par « prépolymère de polyuréthane à terminaisons cyclocarbonate », un prépolymère de polyuréthane comprenant au moins deux groupes cyclocarbonate, lui permettant de subir une réaction de polyaddition en présence d'une polyamine. Un tel polyuréthane à terminaisons cyclocarbonate est obtenu par fonctionnalisation complète des groupes isocyanate d'un polyisocyanate à l'aide de carbonate de glycérol. La fonctionnalisation complète des groupes isocyanate par du carbonate de glycérol peut être obtenue en mélangeant les réactifs en quantité stoechiométrique ou avec un excès stoechiométrique de carbonate de glycérol. Ceci se traduit par un rapport molaire NCO/OH inférieur ou égal à 1. Dans le procédé de préparation du prépolymère de polyuréthane à terminaisons cyclocarbonate (PP2) de l'invention, ce rapport est noté r2.

- par « durcisseur aminé (B1) », on entend désigner le durcisseur comportant au moins deux groupes amines primaires $NH_2$ (B1) utilisé selon l'invention.
- le rapport molaire NCO/OH noté r1, correspond au rapport molaire du nombre de groupes isocyanates sur le nombre de groupes hydroxyles portés respectivement par l'ensemble des isocyanate(s) et alcool(s) présents dans le milieu réactionnel de l'étape E1.
- le rapport molaire NCO/OH noté r2, correspond au rapport molaire du nombre de groupes isocyanates non réagis à l'issue de l'étape précédente (E1) sur le nombre de groupes hydroxyles portés respectivement par l'ensemble des isocyanate(s) et alcool(s) présents dans le milieu réactionnel de l'étape E2.
- l'indice hydroxyle d'un produit alcoolique (en particulier polyol ou carbonate de glycérol pouvant être pur ou sous forme de mélange) représente le nombre de fonctions hydroxyles par gramme de produit, et est exprimé dans le texte de la présente demande sous la forme du nombre équivalent de milligrammes de potasse (KOH) utilisés dans le dosage des fonctions hydroxyles, par gramme de produit.
- la mesure de viscosité à 23°C peut se faire à l'aide d'un viscosimètre Brookfield selon la norme ISO 2555. Typiquement, la mesure réalisée à 23°C peut se faire à l'aide d'un viscosimètre Brookfield RVT, d'une aiguille adaptée au domaine de viscosité et à une vitesse de rotation de 20 tours par minute (tr/mn).
- la mesure de viscosité à 60°C peut se faire à l'aide d'un viscosimètre Brookfield RVT couplé avec un module chauffant de type Thermosel de la marque Brookfield, d'un mobile adapté au domaine de viscosité et à une vitesse de rotation de 20 tours par minute.
- les différents modes de réalisations décrits dans la présente demande peuvent être combinés entre eux.

La présente invention a pour objet un procédé de préparation d'un prépolymère de polyuréthane à terminaisons (2-oxo-1,3-dioxolan-4-yl)méthyl-carbamate (PP2) comprenant :

- dans une première étape (notée E1), la préparation d'un prépolymère de polyuréthane à terminaisons NCO (PP1) par une réaction de polyaddition :

  (i) d'au moins un diisocyanate choisi parmi les diisocyanates aliphatiques ou aromatiques suivants, et leurs mélanges :

    a1) l'isophorone diisocyanate (IPDI) (dont le pourcentage en poids de groupe isocyanate est égale à 38% en poids environ par rapport au poids d'IPDI),
    a2) le 2,4-toluène diisocyanate (2,4-TDI) (dont le pourcentage en poids de groupe isocyanate est égale à 48% en poids environ par rapport au poids de 2,4-TDI),
    a3) le 2,4'-diisocyanate de diphényleméthane (2,4'-MDI) (dont le pourcentage en poids de groupe isocyanate est égale à 34% en poids environ par rapport au poids de 2,4'-MDI),

  (ii) avec au moins un polyol choisi parmi les polyéther polyols et les polydiène polyols, à une température de réaction T1 inférieure à 95°C, dans des conditions anhydres, et dans des quantités de diisocyanate(s) et de polyol(s) conduisant à un rapport molaire NCO/OH, noté $r_1$, allant de 1,6 à 1,9 ; puis

- dans une deuxième étape (notée E2), la réaction dans des conditions anhydres, à une température de réaction T2 inférieure à 95°C, du produit formé à la première étape E1 avec au moins un carbonate de glycérol dans une quantité de carbonate de glycérol conduisant à un rapport molaire NCO/OH, noté $r_2$, allant de 0,9 à 1,0, de préférence de 0,95 à 1,0,

A l'issue de l'étape E1, le prépolymère de polyuréthane à terminaisons NCO (PP1) obtenu est tel que la teneur en groupes NCO (aussi désigné par « taux de NCO » et noté % NCO) présents dans le milieu réactionnel de l'étape E1 va de préférence de 0,5 à 5,7 %, plus préférentiellement de 0,7 à 3 %, et mieux encore de 1 à 2,5% par rapport au poids

du milieu réactionnel de l'étape E1.

Par « teneur en groupes NCO » (aussi désigné par « taux de NCO », noté % NCO), on entend la teneur en groupes isocyanate portés par l'ensemble des composés présents dans le milieu réactionnel, à savoir le prépolymère de polyuréthane à terminaisons NCO (PP1) formé et les autres espèces porteuses de groupe(s) isocyanate présentes, tels que les monomères diisocyanates non réagis. Cette teneur en groupe NCO est calculable de manière bien connue par l'homme du métier et est exprimé en pourcentage en poids par rapport au poids total du milieu réactionnel.

A l'issue de l'étape E2, le milieu réactionnel est exempt de monomères diisocyanates potentiellement toxiques (IPDI, TDI, MDI). Le prépolymère de polyuréthane à terminaisons cyclocarbonate (PP2) selon l'invention ne présente donc pas de risques toxicologiques liés à la présence de tels monomères.

A l'issue de l'étape E2, le prépolymère de polyuréthane à terminaisons cyclocarbonate (PP2) selon l'invention présente de préférence de 0,1 à 1,5 milliéquivalent de groupes cyclocarbonate par gramme dudit prépolymère (PP2), plus préférentiellement de 0,15 à 1 milliéquivalent de groupes cyclocarbonate par gramme dudit prépolymère (PP2) et mieux encore de 0,2 à 0,8 milliéquivalent de groupes cyclocarbonate par gramme dudit prépolymère (PP2).

Le(s) diisocyanate(s) i) utilisable(s) pour préparer le prépolymère de polyuréthane à terminaisons NCO utilisé selon l'invention est (sont) de préférence choisi(s) parmi les diisocyanates suivants, et leur mélange :

a1) l'isophorone diisocyanate (IPDI),
a2) le 2,4-toluène diisocyanate (2,4-TDI).

Plus préférentiellement, le diisocyanate i) est du 2,4-TDI ou constitué essentiellement de 2,4-TDI.

Le(s) diisocyanate(s) i) utilisable(s) selon l'invention (cités en a2 et a3 ci-dessus) peu(ven)t être mis en œuvre sous la forme d'un mélange contenant essentiellement le(s)dit(s) diisocyanate(s) et une faible teneur en composé(s) diisocyanate(s) résiduel(s) issu(s) de la synthèse dudit (desdits) diisocyanate(s). La teneur en composé(s) diisocyanate(s) résiduel(s) tolérée (correspondant aux isomères du 2,4-TDI, et du 2,4'-MDI respectivement) est telle que la mise en œuvre dudit mélange dans la préparation du prépolymère de polyuréthane à terminaisons NCO utilisé selon l'invention n'a pas d'impact sur les propriétés finale dudit prépolymère de polyuréthane.

Par exemple, le(s) diisocyanate(s) i) utilisable(s) selon l'invention (cités en a2 et a3 ci-dessus) peu(ven)t être mis en œuvre sous la forme d'un mélange contenant au moins 99% en poids de diisocyanate(s) et moins de 1% en poids de composé(s) diisocyanate(s) résiduel(s), de préférence sous la forme d'un mélange contenant au moins 99,5% en poids de diisocyanate(s) et moins de 0,5% en poids de composé(s) diisocyanate(s) résiduel(s), plus préférentiellement sous la forme d'un mélange contenant au moins 99,8% en poids de diisocyanate(s) et moins de 0,2% en poids de composé(s) diisocyanate(s) résiduel(s), par rapport au poids dudit mélange.

De préférence, la teneur en composé(s) diisocyanate(s) résiduel(s) est telle que la teneur pondérale en groupe isocyanate dans ledit mélange reste environ égale à celle indiquée ci-dessus par rapport au poids du diisocyanate a2) et a3) seul.

Ainsi, le 2,4-TDI tel que cité en a2) peut être mis en œuvre sous la forme d'un TDI technique, disponible commercialement, correspondant à une composition dont la teneur en 2,4-TDI est d'au moins 99% en poids, et de préférence d'au moins 99,5% en poids, par rapport au poids de ladite composition.

Le 2,4'-MDI tel que cité en a3) peut-être mis en œuvre sous la forme d'un MDI technique, disponible commercialement, correspondant à une composition dont la teneur en 2,4'-MDI est d'au moins 99% en poids, et de préférence d'au moins 99,5% en poids, par rapport au poids de ladite composition.

Ainsi, le procédé de préparation selon l'invention d'un prépolymère de polyuréthane à terminaisons (2-oxo-1,3-dioxolan-4-yl)méthyl-carbamate (PP2) comprend :

- dans une première étape (notée E1), la préparation d'un prépolymère de polyuréthane à terminaisons NCO (PP1) par une réaction de polyaddition :

  (i) d'au moins un diisocyanate choisi parmi les diisocyanates aliphatiques ou aromatiques suivants, et leurs mélanges :

    a1) l'isophorone diisocyanate (IPDI) (dont le pourcentage en poids de groupe isocyanate est égale à 38% en poids environ par rapport au poids d'IPDI),
    a2) le 2,4-toluène diisocyanate (2,4-TDI) (dont le pourcentage en poids de groupe isocyanate est égale à 48% en poids environ par rapport au poids de 2,4-TDI),
    a3) le 2,4'-diisocyanate de diphénylméthane (2,4'-MDI) (dont le pourcentage en poids de groupe isocyanate est égale à 34% en poids environ par rapport au poids de 2,4'-MDI),

  (ii) avec au moins un polyol choisi parmi les polyéther polyols et les polydiène polyols, à une température de

réaction T1 inférieure à 95°C, dans des conditions anhydres, et dans des quantités de diisocyanate(s) et de polyol(s) conduisant à un rapport molaire NCO/OH, noté $r_1$, allant de 1,6 à 1,9 ; puis

- dans une deuxième étape (notée E2), la réaction dans des conditions anhydres, à une température de réaction T2 inférieure à 95°C, du produit formé à la première étape E1 avec au moins un carbonate de glycérol dans une quantité de carbonate de glycérol conduisant à un rapport molaire NCO/OH, noté $r_2$, allant de 0,9 à 1,0, de préférence de 0,95 à 1,0,
- le 2,4-toluène diisocyanate (2,4-TDI) pouvant être utilisé sous la forme d'un mélange de TDI a2) comprenant au moins 99% en poids de 2,4-toluène diisocyanate (2,4-TDI) par rapport au poids total dudit mélange a2), et
- le 2,4'-diisocyanate de diphénylеméthane (2,4'-MDI) pouvant être utilisé sous la forme d'un mélange de MDI a3) comprenant au moins 99% en poids de 2,4'-diisocyanate de diphénylеméthane (2,4'-MDI) par rapport au poids total dudit mélange a3).

Le(s) diisocyanate(s) i) utilisable(s) pour préparer le polyuréthane utilisé selon l'invention sont largement disponibles dans le commerce. A titre d'exemple, on peut citer le « Scuranate® T100 » commercialisé par la société Vencorex, correspondant à un 2,4-TDI de pureté supérieure à 99% en poids, le « Desmodur® I » commercialisé par la société Bayer, correspondant à un IPDI.

Le(s) polyol(s) ii) utilisable(s) pour préparer le prépolymère de polyuréthane à terminaisons NCO utilisé selon l'invention peu(ven)t être choisi(s) parmi ceux dont la masse molaire moyenne en nombre va de 200 à 20000 g/mol, de préférence de 250 à 18 000 g/mol, et mieux encore de 2000 à 12000 g/mol.

De préférence, leur fonctionnalité hydroxyle va de 2 à 3. La fonctionnalité hydroxyle est le nombre moyen de fonction hydroxyle par mole de polyol.

De préférence, le(s) polyol(s) utilisable(s) selon l'invention présente(nt) un hydroxyle (IOH) allant de 9 à 105 mg KOH/g, et de préférence de 13 à 90 mg KOH/g, plus préférentiellement de 25 à 70 mg KOH/g, et mieux encore de 40 à 65 mg KOH/g de polyol.

Le(s) polyéther polyol(s) ii) utilisable(s) selon l'invention est (sont) de préférence choisi(s) parmi les polyoxyalkylène-polyol, dont la partie alkylène, linéaire ou ramifiée, comprend de 1 à 4 atomes de carbone, de préférence de 2 à 3 atomes de carbone.

Plus préférentiellement, le(s) polyéther polyol(s) ii) utilisable(s) selon l'invention est (sont) de préférence choisi(s) parmi les polyoxyalkylène-diols ou polyoxyalkylène triols, et mieux encore des polyoxyalkylène diols, dont la partie alkylène, linéaire ou ramifiée, comprend de 1 à 4 atomes de carbone, de préférence de 2 à 3 atomes de carbone, et dont la masse molaire moyenne en nombre va de 200 à 20000 g/mol, et de préférence de 2000 à 12000 g/mol.

A titre d'exemple de polyoxyalkylène diols ou triols utilisables selon l'invention, on peut citer :

- les polyoxypropylène diol ou triol (aussi désignés par polypropylène glycols (PPG) diol ou triol) ayant une masse molaire moyenne en nombre allant de 400 à 18 000 g/mol et de préférence allant de 400 à 4000 g/mol ;
- les polyoxyéthylène diol ou triol (aussi désignés par polyéthylène glycols (PEG) diol ou triol) ayant une masse molaire moyenne en nombre allant de 400 à 18 000 g/mol et de préférence allant de 400 à 4000 g/mol ;
- les copolymères de PPG/PEG diol ou triol ayant une masse molaire moyenne en nombre allant de 400 à 18 000 g/mol et de préférence allant de 400 à 4000 g/mol ;
- les polytétrahydrofurane (PolyTHF) diol ou triol ayant une masse molaire moyenne en nombre allant de 250 à 4000 g/mol ;
- et leurs mélanges.

De préférence, le(s) polyéther polyol(s) utilisable(s) est (sont) choisi(s) parmi les polyoxypropylène diols ou triols avec un indice de polydispersité allant de 1 à 1,4, en particulier allant de 1 à 1,3. Cet indice correspond au rapport de la masse molaire moyenne en poids à la masse molaire moyenne en nombre du polyéther polyol (Ip =Mw/Mn) déterminées par GPC.

Les polyéther polyols sus-cités sont préparés de manière conventionnelle, et sont largement disponibles dans le commerce. Ils peuvent être obtenus par polymérisation de l'oxyde d'alkylène correspondant en présence d'un catalyseur à base d'un double complexe métal-cyanure.

A titre d'exemples de polyéther diols, on peut citer les polyoxypropylène diols commercialisés sous la dénomination « Acclaim® » par la société Bayer, tels que l'« Acclaim® 12200 » de masse molaire moyenne en nombre voisine de 11335 g/mol et dont l'indice hydroxyle va de 9 à 11 mg KOH/g, l'« Acclaim® 8200 » de masse molaire moyenne en nombre voisine de 8057 g/mol et dont l'indice hydroxyle va de 13 à 15 mg KOH/g, et l'« Acclaim® 4200 » de masse molaire moyenne en nombre voisine de 4020 g/mol, et dont l'indice hydroxyle va de 26,5 à 29,5 mg KOH/g, ou encore le polyoxypropylène diol commercialisé sous la dénomination « Voranol P2000 » par la société Dow de masse molaire moyenne en nombre voisine de 2004 g/mol et dont l'indice hydroxyle est de 56mg KOH/g environ.

A titre d'exemples de polyéther triol, on peut citer le polyoxypropylène triol commercialisés sous la dénomination « Voranol CP3355 » par la société Dow, de masse molaire moyenne en nombre voisine de 3554 g/mol et dont l'indice hydroxyle va de 40 à 50 mg KOH/g.

Le(s) polydiène polyol(s) ii) utilisable(s) selon l'invention est(sont) choisi(s) de préférence parmi les polydiènes comportant des groupes hydroxyles terminaux, et leurs dérivés correspondants hydrogénés ou époxydés.

Plus préférentiellement, le(s) polydiène polyol(s) ii) utilisable(s) selon l'invention est (sont) choisi(s) parmi les polybutadiènes comportant des groupes hydroxyles terminaux, éventuellement hydrogénés ou époxydés.

Mieux encore, le(s) polydiène polyol(s) ii) utilisable(s) selon l'invention est (sont) choisi(s) parmi les homopolymères de butadiène comportant des groupes hydroxyles terminaux, éventuellement hydrogénés ou époxydés.

Par terminaux, on entend que les groupes hydroxyles sont situés aux extrémités de la chaîne principale du polydiène polyol.

Les dérivés hydrogénés sus-cités peuvent être obtenus par hydrogénation totale ou partielle des doubles liaisons d'un polydiène comportant des groupes hydroxyles terminaux, et sont donc saturé(s) ou insaturé(s).

Les dérivés époxydés sus-cités peuvent être obtenus par époxydation chémiosélective des doubles liaisons de la chaîne principale d'un polydiène comportant des groupes hydroxyles terminaux, et comportent donc au moins un groupe époxy dans sa chaîne principale.

A titre d'exemples de polybutadiène polyols, on peut citer les homopolymères de butadiène, saturé ou insaturé, comprenant des groupes hydroxyles terminaux, éventuellement époxydés, tels que commercialisés sous la dénomination poly bd® ou krasol® par la société Cray Valley.

La quantité de diisocyanate(s) et de polyol(s) utilisée lors de l'étape E1 est telle que le rapport molaire NCO/OH, noté r1, va de 1,6 à 1,9, et de préférence de 1,65 à 1,85.

Lorsque le diisocyanate utilisé lors de l'étape E1 est sous la forme d'une composition ou mélange comme décrit plus haut, le calcul du rapport r1 tient compte d'une part des groupes NCO portés par le diisocyanate et les composés diisocyanates résiduels issus de la synthèse dudit(desdits) diisocyanate(s) éventuellement présents en mélange, et d'autre part des groupes OH portés par les polyéther polyol(s) et polydiène polyol(s)) présents dans le milieu réactionnel de l'étape E1.

La réaction de polyaddition de l'étape E1 peut être mise en œuvre en présence ou non d'au moins un catalyseur de réaction.

Le(s) catalyseur(s) de réaction utilisable(s) au cours de la réaction de polyaddition de l'étape E1 peu(ven)t être tout catalyseur connu de l'homme du métier pour catalyser la formation de polyuréthane par réaction d'au moins un diisocyanate avec au moins un polyol choisi parmi les polyéther polyols et les polydiène polyols.

Une quantité allant jusque 0,3% en poids de catalyseur(s) par rapport au poids du milieu réactionnel de l'étape E1 peut être utilisée. En particulier, on préfère utiliser de 0,02 à 0,2% en poids de catalyseur(s) par rapport au poids du milieu réactionnel de l'étape E1.

De préférence, le prépolymère de polyuréthane à terminaisons NCO (PP1) est obtenu par polyaddition d'un ou deux diisocyanates aromatiques ou aliphatiques choisis parmi ceux cités en a1), a2) et a3) tels que décrits dans l'un quelconque des paragraphes précédents, avec un ou deux polyols choisis parmi les polyéther polyols et les polydiène polyols, en présence d'au moins un catalyseur de réaction, à une température de réaction T1 inférieure à 95°C et de préférence allant de 65°C et 80°C, dans des conditions anhydres, et dans des quantités de diisocyanate(s) et de polyéther polyol(s) conduisant à un rapport molaire NCO/OH, $r_1$, allant de 1,6 à 1,9, de préférence de 1,65 à 1,85.

De manière plus préférée, le prépolymère de polyuréthane à terminaisons NCO (PP1) est obtenu par polyaddition de 2,4-TDI, avec un polyol choisi parmi les polyéther diols ou triols, et de préférence avec un polyéther diol, en présence d'au moins un catalyseur de réaction, à une température de réaction T1 inférieure à 95°C et de préférence allant de 65°C à 80°C, dans des conditions anhydres, et dans des quantités de diisocyanate(s) et de polyéther diol(s) ou triol(s) conduisant à un rapport molaire NCO/OH, noté $r_1$, allant de 1,6 à 1,9, de préférence de 1,65 à 1,85.

Le carbonate de glycérol utilisable selon l'invention peut être mis en œuvre soit pur, soit sous la forme d'un mélange ou une composition de carbonate de glycérol contenant au moins 96% en poids de carbonate de glycérol et au plus 3% en poids de composé(s) polyol(s) résiduel(s) (glycérine) issu(s) de la synthèse dudit carbonate de glycérol. Dans ce dernier cas, la teneur en composé(s) polyol(s) résiduel(s) (glycérine) issu(s) de la synthèse dudit carbonate de glycérol est telle que l'indice hydroxyle moyen de ladite composition de carbonate de glycérol va de 475 à 510 mg KOH/g de composition.

De telles compositions sont disponibles dans le commerce sous le nom de Jeffsol® Glycerine Carbonate, auprès de la société Huntsman.

La quantité de carbonate de glycérol utilisée lors de l'étape E2 est telle que le rapport molaire NCO/OH, noté $r_2$, va de 0,9 à 1, et de préférence de 0,95 à 1,0.

Lorsque le carbonate de glycérol utilisé est sous la forme d'une composition ou mélange comme décrit plus haut, le calcul du rapport r2 tient compte d'une part des groupes NCO portés par l'ensemble des isocyanates présents dans le milieu réactionnel de l'étape E2 (prépolymère de polyuréthane à terminaisons NCO (PP1) et éventuellement

les diisocyanates non réagis ayant servis à sa synthèse) et d'autre part des groupes OH portés par le carbonate de glycérol, mais également le(s) composé(s) polyol(s) résiduel(s) (glycérine) éventuellement en mélange avec le carbonate de glycérol.

Selon un mode de réalisation préféré du procédé de préparation du prépolymère de polyuréthane à terminaisons cyclocarbonate (PP2) selon l'invention, le procédé ne comprend pas d'étape de purification des produits de réaction intermédiaires, ou d'étape d'élimination de solvant.

Plus préférentiellement, ledit procédé ne comprend pas d'étape consistant à ajouter un ou plusieurs solvant(s) et/ou plastifiant(s). Un tel procédé de préparation peut ainsi être mis en œuvre sans interruption, avec des vitesses de ligne de production très élevées à l'échelle industrielle.

Selon un mode de réalisation plus préféré du procédé de préparation d'un prépolymère de polyuréthane à terminaisons (2-oxo-1,3-dioxolan-4-yl)méthyl-carbamate) (PP2) selon l'invention, celui-ci consiste en une première étape E1 et en une deuxième étape E2, telles que définies dans l'un quelconque des paragraphes précédent.

La présente invention a également pour objet un prépolymère de polyuréthane à terminaisons (2-oxo-1,3-dioxolan-4-yl)méthyl-carbamate (PP2) susceptible d'être obtenu selon un procédé de préparation selon l'invention, tel que décrit dans l'un quelconque des paragraphes précédents.

Selon un premier mode de réalisation du prépolymère de polyuréthane à terminaisons cyclocarbonate (PP2) selon l'invention, celui-ci possède de préférence une viscosité mesurée à température ambiante (23°C) inférieure ou égale à 1500 Pa.s., plus préférentiellement inférieure ou égale à 600 Pa.s., et mieux encore inférieure ou égale à 400 Pa.s., permettant de formuler aisément, une composition adhésive selon l'invention, notamment sans ajout de solvant.

Selon un deuxième mode de réalisation du prépolymère de polyuréthane à terminaisons cyclocarbonate (PP2) selon l'invention, celui-ci possède de préférence une viscosité mesurée à 60°C inférieure ou égale à 50 Pa.s., plus préférentiellement inférieure ou égale à 40 Pa.s., et mieux encore inférieure ou égale à 30 Pa.s., permettant de formuler aisément, une composition adhésive selon l'invention, notamment sans ajout de solvant.

Selon une variante préférée de ces modes de réalisation, le prépolymère de polyuréthane à terminaisons cyclocarbonate (PP2) possède une viscosité mesurée à température ambiante (23°C) inférieure ou égale à 600 Pa.s. et une viscosité mesurée à 60°C inférieure ou égale à 40 Pa.s.

La présente invention a également pour objet un système multicomposant, de préférence sans solvant comprenant :

- comme premier composant (composant A), une composition comprenant au moins un prépolymère de polyuréthane à terminaisons cyclocarbonate (PP2) selon l'invention et
- comme deuxième composant (composant B), une composition comprenant au moins un durcisseur possédant au moins deux groupes amine primaire ($-NH_2$) (noté durcisseur aminé (B1)).

Les composants du système multicomposants sont généralement stockés séparément et sont mélangés au moment de l'emploi, à une température de mélange T3, pour former une composition adhésive destinée à être appliquée sur la surface d'un matériau. La composition adhésive selon l'invention ainsi obtenue comprend au moins un poly(hydroxyuréthane-uréthane) comportant au moins deux groupes amine primaire, ledit poly(hydroxyuréthane-uréthane) comportant au moins deux groupes amine primaire résultant de la réaction du prépolymère de polyuréthane (PP2) et du durcisseur aminé (B1).

Le mélange des composants du système multicomposants, et en particulier des composants A et B peut être réalisé en conditions anhydres.

De préférence, les quantités de prépolymère(s) de polyuréthane à terminaisons cyclocarbonate (PP2) et de durcisseur(s) aminé(s) (B1) présents dans le système multicomposant selon l'invention conduisent à un rapport molaire du nombre de groupes cyclocarbonate sur le nombre de groupes amine primaire noté r3, allant de 0,5 à 1.

Le rapport molaire noté r3 dans l'ensemble de la présente demande correspond au rapport molaire du nombre total de groupes cyclocarbonate présents dans le système multicomposant, sur le nombre total de groupes amine primaire présents dans le système multicomposant.

L'utilisation d'un tel rapport r3 permet d'obtenir par une réaction de polyaddition entre le prépolymère de polyuréthane à terminaisons cyclocarbonate (PP2) et le(s) durcisseur(s) aminés (B1), une composition adhésive comprenant au moins un poly(hydroxyuréthane-uréthane) comportant au moins deux ou trois groupes amine primaire selon l'invention et présentant des performances mécaniques améliorées.

Le(s) durcisseur(s) aminé(s) (B1) utilisé(s) selon l'invention possède(nt) de préférence une viscosité adaptée à la température de mélange T3. Le(s) durcisseur(s) aminés (B1) utilisé(s) selon l'invention possède(nt) de préférence une alcalinité primaire allant de 0,4 à 34 méq/g, plus préférentiellement de 3,0 à 34 méq/g de durcisseur aminé.

L'alcalinité primaire est le nombre de fonctions amine primaire $NH_2$ par gramme de durcisseur aminé (B1), ledit nombre étant exprimé sous la forme de milliéquivalents de HCl (ou milliéquivalents de $NH_2$) utilisé dans le dosage des fonctions amines, déterminé de manière bien connue par titrimétrie.

Le(s) durcisseur(s) aminé(s) (B1) utilisé(s) selon l'invention peu(ven)t être des composés monomériques ou des polymériques.

Le(s) durcisseur(s) aminé(s) (B1) utilisé(s) selon l'invention peu(ven)t être choisie(s) parmi des composés hydrocarbonés, linéaires, ramifiés, cycliques ou acycliques, saturés ou insaturés, et comportant au moins deux groupes amine primaire $-NH_2$, la chaîne hydrocarbonée entre les fonctions $-NH_2$ (ou avantageusement $-CH_2-NH_2$) étant éventuellement interrompue par un ou plusieurs hétéroatomes choisi parmi O, N, S et/ou éventuellement interrompue par un ou plusieurs groupes divalents -NH- (amine secondaire), - COO- (ester), -CONH- (amide), -NHCO- (carbamate), -C=N- (imine), -CO- (carbonyle) et - SO- (sulfoxyde), le(s)dit(s) durcisseur(s) aminé(s) présentant une alcalinité primaire allant de 0,4 à 34 méq/g, plus préférentiellement de 3,0 à 34 méq/g de durcisseur aminé.

A titre d'exemple de tels composés, on peut citer par exemple:

- les alkylène polyamines comportant au moins deux groupes amine primaire $-NH_2$,
- les cycloalkylène polyamines comportant au moins deux groupes amine primaire - $NH_2$,
- les polyamines comprenant à la fois des groupes alkyles et cycloalkyles et comportant au moins deux groupes amine primaire $-NH_2$,
- les polyéther polyamines comportant au moins deux groupes amine primaire $-NH_2$,
- les polyéthylène imines comportant au moins deux groupes amine primaire $-NH_2$,
- les polypropylène imines comportant au moins deux groupes amine primaire $-NH_2$,
- les polyamidoamines comportant au moins deux groupes amine primaire $-NH_2$.

De préférence, le(s) durcisseur(s) aminé(s) (B1) utilisé(s) selon l'invention possède(nt) deux ou trois groupes amines primaires.

Plus préférentiellement, le(s) durcisseur(s) aminé(s) (B1) utilisé(s) selon l'invention est (sont) choisi(s) parmi des composés hydrocarbonés, linéaires, ramifiés, cycliques ou acycliques, saturés et comportant deux ou trois groupes amines primaires $-NH_2$, lesdits composés étant éventuellement interrompus par un ou plusieurs hétéroatomes choisis parmi un atome d'oxygène -O- et un atome d'azote -N- et/ou un ou plusieurs groupes divalents amine secondaire -NH-, et présentant une alcalinité primaire allant de 0,4 à 34 méq/g, plus préférentiellement de 3,0 à 34 méq/g de durcisseur aminé.

A titre d'exemple de tels composés, on peut citer par exemple:

- les alkylène diamines et alkylène triamines, comportant respectivement deux ou trois groupes amines primaires $-NH_2$,
- les cycloalkylène diamines et triamines, comportant respectivement deux ou trois groupes amines primaires $-NH_2$,
- les diamines et triamines comprenant à la fois des groupes alkyles et cycloalkyles, comportant respectivement deux ou trois groupes amines primaires $-NH_2$,
- les polyéther diamines et polyéther triamines, comportant respectivement deux ou trois groupes amines primaires $-NH_2$,
- les polyéthylène imines comportant deux ou trois groupes amines primaires $-NH_2$,
- les polypropylène imines comportant deux ou trois groupes amines primaires $-NH_2$,
- les polyamidoamines comportant deux ou trois groupes amines primaires $-NH_2$.

Plus particulièrement, on peut citer :

- l'éthylène diamine (EDA) ayant une alcalinité primaire de 33,28 méq/g :

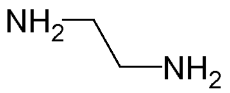

;

- la diéthylènetriamine (DETA) ayant une alcalinité primaire de 19,39 méq/g :

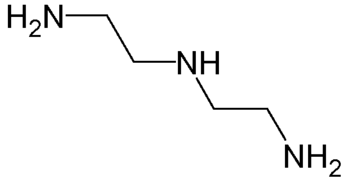

;

- la tris(2-aminoéthyl)amine (TAEA) ayant une alcalinité primaire de 20,52 méq/g :

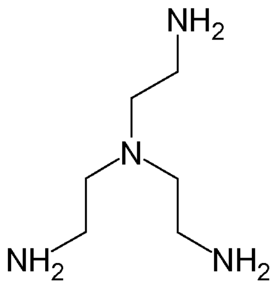

;

- les polyéthylène imines répondant aux formules ci-dessous:

$$H_2N\text{-}(CH_2\text{-}CH_2\text{-}NH)_x\text{-}CH_2\text{-}CH_2\text{-}NH_2$$

$$N[\text{-}(CH_2\text{-}CH_2\text{-}NH)_x\text{-}CH_2\text{-}CH_2\text{-}NH_2]_3$$

dans lesquelles x est un nombre entier tel que l'alcalinité primaire va de 0,4 à 34 méq/g, plus préférentiellement de 3,0 à 34 méq/g ;

- les polypropylène imines répondant aux formules ci-dessous :

$$H_2N\text{-}(CH_2\text{-}CH_2\text{-}CH_2\text{-}NH)_x\text{-}CH_2\text{-}CH_2\text{-}CH_2\text{-}NH_2$$

$$N[\text{-}(CH_2\text{-}CH_2\text{-}CH_2\text{-}NH)_{x\text{-}}CH_2\text{-}CH_2\text{-}CH_2\text{-}NH_2]_3$$

dans lesquelles x est un nombre entier tel que l'alcalinité primaire est va de 0,4 à 34 méq/g, plus préférentiellement de 3,0 à 34 méq/g ;

- les poly(éthylène-propylène) imines répondant aux formules ci-dessous :

$$H_2N\text{-}(CH_2\text{-}CH_2\text{-}NH)_x\text{-}(CH_2\text{-}CH_2\text{-}CH_2\text{-}NH)_yH$$

$$N[\text{-}(CH_2\text{-}CH_2\text{-}NH)_{x\text{-}}(CH_2\text{-}CH_2\text{-}CH_2\text{-}NH)_yH]_3$$

dans lesquelles x et y sont des nombres entiers tel que l'alcalinité primaire va de 0,4 à 34 méq/g, plus préférentiellement de 3,0 à 34 méq/g ;

- l'hexaméthylène diamine (HMDA) ayant une alcalinité primaire de 17,11 méq/g

$$NH_2\text{-}CH_2\text{-}CH_2\text{-}CH_2\text{-}CH_2\text{-}CH_2\text{-}CH_2\text{-}NH_2 ;$$

- l'isophorone diamine (IPDA) ayant une alcalinité primaire de 11,73 méq/g

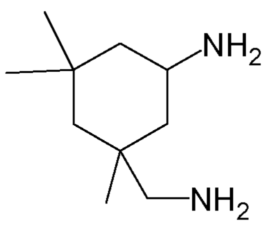

;

- les polyéther diamines possédant une alcalinité primaire allant de 7,58 à 19,23 méq/g et répondant à la formule ci-dessous :

$$H_2N\text{-}(CH_2)_y\text{-}O\text{-}[\text{-}CH_2\text{-}CH(R^4)\text{-}O\text{-}]_n\text{-}(CH_2)_y\text{-}NH_2$$

dans laquelle y = 2 ou 3, $R^4$ est un atome d'hydrogène ou un groupe alkyle de 1 à 2 atomes de carbone, et n est

un nombre entier allant de 0 à 3 tel que l'alcalinité primaire va de 0,4 à 34 méq/g, plus préférentiellement de 3,0 à 34 méq/g ; de tels polyéther diamines sont commercialisés par exemple sous la dénomination JEFFAMINES EDR-148 et EDR-176 par la société Huntsman et présentent des alcalinités primaires respectives de 13,51 et 11,36 méq/g ;

- les amines grasses dimères et trimères comportant deux ou trois groupes amines primaire d'alcalinité primaire allant de 3,39 méq/g à 3,60 méq/g. Ces amines grasses dimères et trimères peuvent être obtenues à partir d'acides gras dimérisés et trimérisés correspondants. A titre d'exemple de telles amines grasses dimères, on peut citer celles répondant aux formules suivantes :

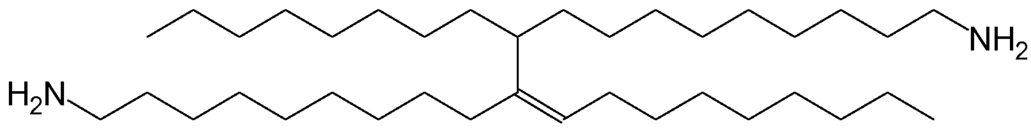

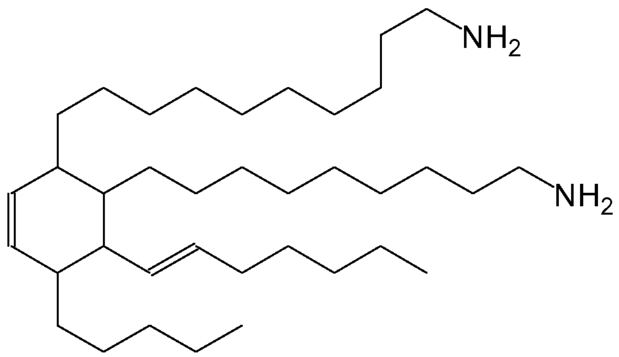

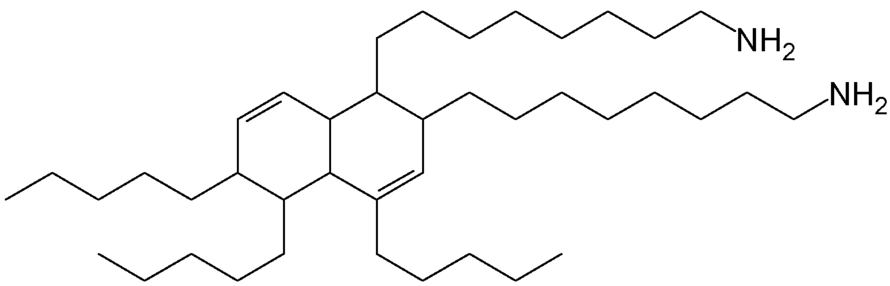

Les acides gras dimères et trimères utilisés pour préparer les amines grasses sus-cités sont obtenus par polymérisation à haute température et sous pression d'acides gras insaturés monocarboxyliques (acide monomère), comprenant de 6 à 22 atomes de carbone, de préférence de 12 à 20 atomes de carbone, et proviennent de sources végétales ou animales. On peut citer comme exemple de tels acides gras insaturés, les acides en $C_{18}$ ayant une ou deux doubles liaisons (respectivement l'acide oléïque ou linoléïque) obtenus à partir de tallol qui est un sous-produit de la fabrication de la pâte à papier. Après polymérisation de ces acides gras insaturés, on obtient un mélange technique contenant en moyenne 30-35 % en poids d'acides gras monocarboxyliques souvent isomérisés par rapport aux acides gras insaturés monocarboxyliques de départ, 60-65 % en poids d'acides dicarboxyliques (acides dimères) comprenant le double du nombre de carbone par rapport aux acides gras insaturés monocarboxyliques de départ et 5-10 % en poids d'acides tricarboxyliques (acides trimères) ayant le triple du nombre de carbone par rapport aux acides gras insaturés monocarboxyliques de départ. Par purification de ce mélange, on obtient les différents grades commerciaux d'acides dimères, monomères ou trimères. Ces acides gras dimères et trimères sont ensuite soumis à une réaction d'ammoniation réductrice ($NH_3/H_2$) en présence d'un catalyseur, permettant d'obtenir les amines grasses dimérisées.

Avantageusement, les groupes amines primaires $-NH_2$ des durcisseurs aminés (B1) utilisables selon l'invention cités dans les paragraphes précédents, sont des groupes méthylène amine ($-CH_2-NH_2$).

Lorsque le système multicomposant selon l'invention comprend au moins deux durcisseurs aminés (B1), ceux-ci peuvent être compris dans deux composants différents, par exemple un composant (B) et un composant (C). Les composants (A), (B) et (C) sont alors stockés séparément avant mélange au moment de l'emploi dudit système, à une température de mélange T3, pour former une composition adhésive destinée à être appliquée sur la surface d'un matériau.

Le système multicomposant selon l'invention peut comprendre au moins un catalyseur de réticulation.

Le(s) catalyseur(s) de réticulation peu(ven)t être n'importe quel catalyseur habituellement utilisé(s) pour accélérer la réaction d'ouverture de cycle d'un composé comportant un groupe cyclocarbonate (2-oxo-1,3-dioxolan-4-yl)méthyl-carbamate par une amine primaire.

A titre d'exemple de catalyseur de réticulation utilisable selon l'invention, on peut citer :

- les alcoolates, tels que le ter-butylate de potassium ou le méthanolate de sodium ;
- les bases fortes choisis parmi :

    ◦ les phosphazènes tel que le 2-tert-butylimino-2-diéthylamino-1,3-diméthylperhydro-1,3,2-diazaphosphorure (BMEP),

    o les guanidines telles que :

        le 1,5,7-triazabicyclo[4.4.0]dec-5-ene (TBD)

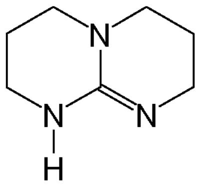
,

        le N-méthyl triazabicyclodécène (Me-TBD)

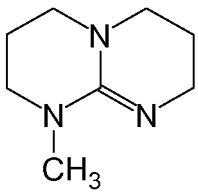
,

    o des amines tertiaires telles que :

        le 1,8-diazabicyclo[5.4.0]undec-7-ène (DBU)

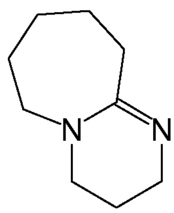
,

        le 1,5-diazabicyclo[4.3.0]non-5-ène (DBN)

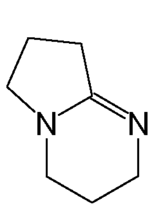
,

        l'éther diéthylique-2,2'-morpholine (DMDEE)

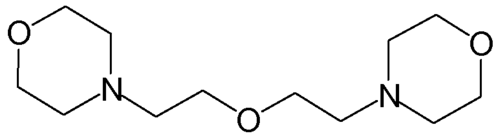

,

le 1,4-diazabicyclo[2.2.2]octane (DABCO)

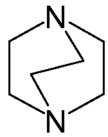

.

Une quantité allant de 0,05 à 1 % en poids de catalyseur(s) de réticulation par rapport au poids total du système multicomposant selon l'invention peut être utilisée.

Le(s) catalyseur(s) de réticulation peu(ven)t être réparti(s) dans un ou plusieurs des composants formant le système multicomposant selon l'invention.

Avantageusement, le système multicomposant selon l'invention peut comprendre au moins une charge minérale.

La (ou les) charge(s) minérale(s) utilisable(s) est (sont) choisie(s) de manière à améliorer les performances mécaniques de la composition selon l'invention à l'état réticulée.

A titre d'exemple de charge(s) utilisable(s), on peut citer de manière non limitative le carbonate de calcium, le kaolin, la silice, le gypse, les microsphères et les argiles.

De préférence, la (ou les) charge(s) minérale(s) possède(nt) une taille de particule maximale, notamment un diamètre externe, inférieur(e) à 100 μm et de préférence inférieur(e) à 10 μm. De telles charges peuvent être sélectionnées de manière bien connue par l'homme du métier en utilisant des tamis de mailles appropriées.

De préférence, la teneur totale en charge(s) éventuellement présente(s) dans le système multicomposant selon l'invention ne dépasse pas 70% en poids du poids total dudit système.

Le(s) charge(s) peu(ven)t être répartie(s) dans un ou plusieurs des composants formant le système multicomposant selon l'invention.

Le système multicomposant selon l'invention peut inclure moins de 2% en poids d'un ou plusieurs additifs choisis de manière appropriée pour ne pas détériorer les propriétés de la composition adhésive selon l'invention à l'état réticulé. On peut citer parmi les additifs utilisables des antioxydants ou stabilisants UV (ultra-violet), des pigments, et des colorants. Ces additifs sont de préférence choisis parmi ceux habituellement utilisés dans des compositions adhésives.

Le(s) additif(s) peu(ven)t être répartie(s) dans un ou plusieurs des composants formant le système multicomposant selon l'invention.

Du fait de la faible viscosité du prépolymère de polyuréthane à terminaisons cyclocarbonate (PP2) selon l'invention, le système multicomposant selon l'invention peut être mis en œuvre directement par mélange de ses différents composants, sans ajout de solvant et/ou de plastifiant, réducteurs de viscosité, dans le composant (A) et/ou sans chauffage dudit composant à des températures au-delà de 95°C.

De préférence, le prépolymère de polyuréthane à terminaisons cyclocarbonate (PP2) selon l'invention possède une viscosité mesurée à 23°C inférieure ou égale à 600 Pa.s. et une viscosité mesurée à 60°C inférieure ou égale à 40 Pa.s, permettant au système multicomposant selon l'invention d'être avantageusement mis en œuvre sans ajout de solvant et/ou de plastifiant dans le composant (A) comprenant ledit prépolymère (PP2), et/ou sans chauffage dudit composant.

Le système multicomposant selon l'invention comprend ainsi avantageusement:

- comme premier composant (A), une composition comprenant au moins un prépolymère(s) de polyuréthane à terminaisons cyclocarbonate (PP2) selon l'invention et
- comme deuxième composant (B), une composition comprenant au moins un ou deux durcisseur(s) aminé(s) tel(s) que décrit(s) dans l'un des paragraphes précédents (B1), et
- ne comprend pas de solvant et/ou de plastifiant.

Le système multicomposantselon l'invention peut être un système bicomposant, c'est-à-dire un système constitué de deux composants (A) et (B), lesdits composants (A) et (B) étant tels que décrits dans l'un des paragraphes précédents.

Dans chacun des paragraphes précédents, la répartition et la teneur totale en catalyseur(s) de réticulation, charge(s) minérale(s), et/ou additif(s) éventuellement présent(s) dans le système multicomposant, sont choisis de manière à ne pas affecter les conditions de mélange des différents composants dudit système.

De préférence, le composant (A) comprend au moins 97% en poids, et plus préférentiellement au moins 98% en poids de prépolymère(s) de polyuréthane à terminaisons cyclocarbonate (PP2) selon l'invention.

L'invention porte également sur l'utilisation d'un prépolymère de polyuréthane à terminaisons cyclocarbonate (PP2) selon l'invention, pour la fabrication d'une composition adhésive (colle ou mastic), de préférence sans solvant, notamment sous la forme d'un système multicomposant.

En particulier, le prépolymère de polyuréthane à terminaisons cyclocarbonate (PP2) selon l'invention est mis à réagir avec au moins un durcisseur aminé (B1) tel que décrit précédemment pour former par une réaction de polyaddition une composition comprenant au moins un poly(hydroxyuréthane-uréthane) comportant au moins deux, de préférence deux ou trois, groupes amine primaire. Les quantités de prépolymère de polyuréthane à terminaisons cyclocarbonate (PP2) et de durcisseur aminé (B1) utilisés pour obtenir un tel poly(hydroxyuréthane-uréthane) sont telles que le rapport molaire r3 va de préférence de 0,5 à 1.

De préférence, la fabrication de la composition adhésive est réalisée sans ajout de composé destiné à abaisser la viscosité de ladite composition, tel qu'un solvant (aqueux, organique), un diluant réactif et/ou un plastifiant.

De préférence, les composants du système multicomposant selon l'invention comprenant le(s) prépolymère(s) de polyuréthane à terminaisons cyclocarbonate (PP1) selon l'invention et le(s) durcisseur(s) aminé(s) (B1) selon l'invention sont mélangés à une température T3 telle que définie précédemment.

De préférence, la composition adhésive selon l'invention est fabriquée par la mise en œuvre du système multicomposant selon l'invention, c'est-à-dire le mélange des différents composants le constituant, à une température de mélange T3.

L'invention a également pour objet un procédé d'assemblage de matériaux mettant en œuvre le prépolymère de polyuréthane à terminaisons cyclocarbonate (PP2) selon l'invention, notamment par l'intermédiaire de la mise en œuvre du système multicomposant selon l'invention comprenant les étapes suivantes :

- le mélange d'au moins un prépolymère de polyuréthane à terminaisons cyclocarbonate (PP2) tel que décrit précédemment et d'au moins un durcisseur aminé (B1), puis
- l'enduction dudit mélange sur la surface d'un premier matériau, puis
- le contrecollage de la surface d'un second matériau sur ladite surface enduite, puis
- la réticulation dudit mélange.

L'étape de mélange d'au moins un prépolymère de polyuréthane à terminaisons cyclocarbonate (PP2) tel que décrit précédemment et d'au moins un durcisseur aminé (B1) tel que décrit précédemment, peut être réalisée notamment par la mise en œuvre du système multicomposant selon l'invention, à savoir par mélange des composants comprenant respectivement le(s) prépolymère(s) de polyuréthane à terminaisons cyclocarbonate (PP2) (composant (A)) et le(s) durcisseur(s) aminé(s)(composant (B)), tel que définis précédemment.

Cette étape de mélange peut être réalisée à température ambiante ou à chaud, avant enduction.

De préférence, le mélange est réalisé à une température inférieure à la température de dégradation des ingrédients compris dans l'un ou l'autre des composants (A) et (B). En particulier, le mélange est réalisé à une température T3 inférieure à 95°C, de préférence allant de 15 à 80°C, afin d'éviter toute dégradation thermique.

De préférence, on mélange le prépolymère de polyuréthane à terminaisons cyclocarbonate (PP2) et le(s) durcisseur(s) aminé (B1) dans des quantités telles que le rapport molaire du nombre de groupe cyclocarbonate sur le nombre de groupes amine primaire présents dans le mélange, noté r3, va de 0,5 à 1.

Dans chacune de ces variantes, l'enduction dudit mélange peut être réalisée sur tout ou partie de la surface d'un matériau. En particulier, l'enduction dudit mélange peut être réalisée sous la forme d'une couche d'épaisseur allant de 0,002 à 5 mm.

Eventuellement, la réticulation dudit mélange sur la surface du matériau peut-être accélérée en chauffant le(s) matériau(x) enduit(s) à une température inférieure ou égale à 120°C. Le temps requis pour compléter cette réaction de réticulation et assurer ainsi le niveau de cohésion requis est en général de l'ordre de 0,5 à 24 heures.

L'enduction et le contrecollage du second matériau sont généralement effectués dans un intervalle de temps compatible avec le procédé d'enduction, comme il est bien connu de l'homme du métier, c'est-à-dire avant que la couche d'adhésif perde sa capacité à fixer par collage les deux matériaux.

Les matériaux appropriés sont, par exemple, des substrats inorganiques tels que le verre, les céramiques, le béton, les métaux ou les alliages (comme les alliages d'aluminium, l'acier, les métaux non-ferreux et les métaux galvanisés) ainsi que les métaux et les composites éventuellement revêtus de peinture (comme dans le domaine automobile); ou bien des substrats organiques comme le bois, des plastiques tel que le PVC, le polycarbonate, le PMMA, les résines époxy et les polyesters.

Les performances mécaniques et le pouvoir adhésif des compositions adhésives selon l'invention peuvent être mesurés conformément aux tests décrits dans les exemples qui suivent, à savoir une fois réticulées. Les compositions adhésives selon l'invention sont adaptées à un large panel d'applications telles que l'agroalimentaire, la cosmétique, l'hygiène, le transport, l'habitat, les textiles, l'emballage. En particulier, les compositions adhésives selon l'invention présentent une force d'élongation à la rupture intrinsèque allant de 0,3 à 10 MPa, tel qu'illustré dans les exemples (mesure des performances mécaniques).

Les exemples suivants sont donnés à titre purement illustratif de l'invention et ne sauraient être interprétés pour en limiter la portée.

A - Synthèse du prépolymère polyuréthane à terminaisons cyclocarbonate (PP2) (composant A)

Les composants (A) des exemples 1 à 4 selon l'invention et de l'exemple comparatif CE1 sont préparés à l'aide des réactifs indiqués dans le tableau 1 et selon le mode opératoire décrit dans les pages suivantes. Les quantités indiquées dans le tableau 1 sont exprimées en gramme de produits commerciaux.

**Tableau 1**

| Ingrédients | CE1 | 1 | 2 | 3 | 4 |
|---|---|---|---|---|---|
| PPG diol | 77,1 | 81,4 | - | - | - |
| PPG triol | - | - | 83,6 | 83,6 | 83,6 |
| 2,4-TDI | 13,5 | 11,9 | 10,4 | 10,4 | 10,4 |
| Catalyseur de réaction | 0,1 | 0,1 | 0,1 | 0,1 | 0,1 |
| Rapport NCO/OH, r1 | 2,01 | 1,68 | 1,78 | 1,78 | 1,78 |
| Carbonate de glycérol | 9,3 | 6,6 | 5,9 | 5,9 | 5,9 |
| Rapport molaire NCO/OH, r2 | 0,93 | 0,93 | 0,98 | 0,98 | 0,98 |

Dans le tableau 1, on utilise comme:

- PPG diol, le produit commercial vendu sous la dénomination Voranol® P2000 par la société Dow, correspondant à du polypropylène glycol diol, ayant un indice d'hydroxyle environ égal à 56 mg KOH/g de PPG diol,
- PPG triol, le produit commercial vendu sous la dénomination Voranol ® CP3355 par la société Dow, correspondant à du polypropylène glycol triol, ayant un indice d'hydroxyle environ égal à 45 mg KOH/g de PPG triol,
- 2,4-TDI, le produit commercial vendu sous la dénomination Scuranate® T100 par la société Vencorex, correspondant à une composition de TDI à 99% en poids de 2,4-TDI,
- catalyseur de réaction, le produit commercial vendu sous la dénomination Borchikat® 315 par la société OM Group, catalyseur de réaction de néodécanoate de bismuth,
- carbonate de glycérol, le produit commercial vendu sous la dénomination Jeffsol® GC par la société Huntsman, correspondant à une composition à 96% en poids minimum de carbonate de glycérol et 3% en poids maximum de glycérine, ayant un indice d'hydroxyle environ égal à 505 mg KOH/g de composition.

Les rapports molaires r1 et r2 sont calculés de manière bien connue par l'homme du métier à partir des quantités molaires en réactifs utilisés. En exprimant le nombre de mole(s) de diisocyanate utilisé en fonction de la masse molaire de ce dernier ; le nombre de mole(s) de polyol utilisé en fonction de l'indice hydroxyle (mg KOH/g) de ce dernier et de la masse molaire de KOH égale à 56g/mol ; le nombre de mole(s) de carbonate de glycérol utilisé en fonction de l'indice hydroxyle (mg KOH/g) de ce dernier et de la masse molaire de KOH égale à 56g/mol, on peut écrire :

$$r1 = \frac{2 \text{ x m1 (diisocyanate) x 1000 x 56}}{\text{M (diisocyanate) x IOH(polyol) x m2 (polyol)}}$$

et

$$r2 = \frac{\frac{[2 \text{ x m1 (diisocyanate)}]}{\text{M (diisocyanate)}} - \frac{[\text{IOH(polyol) x m2 (polyol)}]}{56}}{\text{IOH (carbonate de glycérol)x m3 (carbonate de glycérol)}} \text{ x } 56$$

où :

m1 (diisocyanate) correspond à la masse de Scuranate® T100 introduit,
M (diisocyanate) correspond à la masse molaire du TDI qui est égal à 174 g/mol,
IOH (polyol) correspond à l'indice hydroxyle du polyol utilisé (Voranol® P2000 ou du Voranol ® CP3355 selon l'exemple considéré),
m2 (polyol) correspond à la masse du polyol utilisé,
IOH (carbonate de glycérol) correspond à l'indice d'hydroxyle du Jeffsol® GC,
m3 (carbonate de glycérol) correspond à la masse de Jeffsol® GC introduit.

Etape E1 : Synthèse du prépolymère polyuréthane à terminaisons NCO (PP1)

Dans un réacteur placé sous atmosphère d'azote, on chauffe le diisocyanate à 50°C puis on introduit sous agitation constante au goutte à goutte un mélange de polyol et de catalyseur de réaction en contrôlant la température de réaction T1 de manière à ce qu'elle ne dépasse pas 80°C, conformément aux quantités indiquées dans le tableau 1.
Ce mélange est maintenu sous agitation constante à 80°C, sous azote, jusqu'à réaction complète des fonctions NCO du diisocyanate.
Le suivi de la réaction est réalisé en mesurant l'évolution de la teneur en groupes NCO dans le mélange, par exemple par un dosage de dibutylamine en retour, à l'aide d'acide chlorhydrique selon la norme NF T52-132. La réaction est stoppée lorsque le « taux de NCO » (%NCO) mesuré est environ égal au taux de NCO souhaité.

| Caractérisation du prépolymère de polyuréthane à terminaisons NCO (PP1) | CE1 | 1 | 2 | 3 | 4 |
|---|---|---|---|---|---|
| %NCO calculé dans le milieu réactionnel de l'étape E1 (en % en poids du poids du milieu réactionnel) | 3,6 | 2,5 | 2,3 | 2,3 | 2,3 |

Etape E2 : Synthèse du prépolymère polyuréthane à terminaisons cyclocarbonate (PP2) (composant A)

Une fois la réaction de l'étape E1 terminée, on introduit dans le réacteur le carbonate de glycérol dans les proportions indiquées dans le tableau 1, sous agitation et sous azote, en veillant à ce que la température de réaction T2 ne dépasse pas 80°C. Le mélange prépolymère polyuréthane à terminaisons NCO (PP1) - carbonate de glycérol est maintenu sous agitation constante à 80 °C, sous azote, jusqu'à disparition complète des fonctions NCO visibles en Infra-Rouge (IR) (environ 2250 $cm^{-1}$).

Mesure de viscosité :

La viscosité du composant (A) obtenu est mesurée 24 heures après la fin de réaction (J+1) à 23°C et 60°C et exprimée en Pascal seconde (Pa.s). L'ensemble des valeurs mesurées pour les exemples 1 à 4 sont regroupés dans le tableau 2 suivant.
La mesure de viscosité à 23°C se fait à l'aide d'un viscosimètre Brookfield RVT, avec une aiguille adaptée au domaine de viscosité et à une vitesse de rotation de 20 tours par minute (tr/mn).
La mesure de viscosité à 60°C se fait à l'aide d'un viscosimètre Brookfield RVT couplé avec un module chauffant de type Thermosel de la marque Brookfield, avec un mobile adapté au domaine de viscosité et à une vitesse de rotation de 20 tours par minute.

**Tableau 2**

| Caractérisation du prépolymère de polyuréthane à terminaisons cyclocarbonate (PP2) | CE1 | 1 | 2 | 3 | 4 |
|---|---|---|---|---|---|
| Viscosité à J+1 à 23°C (Pa.s.) | 375 | 365 | 1250 | 1250 | 1250 |
| Viscosité à J+1 à 60°C (Pa.s.) | N.M. | 11,4 | 47,7 | 47,7 | 47,7 |
| Teneur calculée en groupe cyclocarbonate dans le prépolymère (PP2) (méq/g de prépolymère (PP2)), notée $t_{cc}$ (PP2) | 0,84 | 0,60 | 0,53 | 0,53 | 0,53 |
| N.M. : non mesurée | | | | | |

La teneur en groupe cyclocarbonate dans le prépolymère (PP2) (notée $t_{cc}$ (PP2)) (exprimée en méq/g de

prépolymère (PP2)) est calculée de manière bien connue de l'homme du métier à partir de la quantité molaire de carbonate de glycérol utilisé. En exprimant le nombre de mole(s) de carbonate de glycérol utilisé en fonction de l'indice hydroxyle (mg KOH/g) de ce dernier et de la masse molaire de KOH égale à 56g/mol, on peut écrire :

$$t_{cc} = \frac{\text{IOH (carbonate de glycérol) x m3 (carbonate de glycérol)}}{\text{56 x m (PP2)}}$$

où :

IOH (carbonate de glycérol) correspond à l'indice d'hydroxyle du Jeffsol® GC,
m3 (carbonate de glycérol) correspond à la masse de Jeffsol® GC introduit,
m (PP2) correspond à la masse de prépolymère (PP2), soit à la masse totale des ingrédients utilisés pour la synthèse du prépolymère (PP2) (PPG diol ou triol, 2,4-TDI, catalyseur de réaction).

B - Préparation des compositions adhésives selon l'invention par mélange des composants (A) et (B)

Les compositions adhésives 1' à 4' selon l'invention sont préparées par mélangeage des différents ingrédients indiqués dans le tableau 3 suivant, en suivant le mode opératoire décrit ci-après. Les quantités indiquées dans le tableau 3 sont exprimées en grammes.

**Tableau 3**

| | 1' | 2' | 3' | 4' |
|---|---|---|---|---|
| Composant A de l'exemple 1 | 100 | - | - | - |
| Composant A de l'exemple 2 | - | 100 | - | - |
| Composant A de l'exemple 3 | - | - | 100 | - |
| Composant A de l'exemple 4 | - | - | - | 100 |
| TAEA | 4,25 | 0,5 | 0,5 | - |
| HMDA | - | 3,8 | 3,8 | 5,3 |
| Carbonate de calcium | 50 | - | 50 | 50 |
| Rapport molaire r3 | 0,7 | 0,7 | 0,7 | 0,6 |

Dans le tableau 3, on utilise :

- la tris(2-aminoéthyl)amine (TAEA) d'alcalinité primaire = 20,52 méq/g de TAEA,
- l'hexaméthylène diamine (HMDA) d'alcalinité primaire = 17,21 méq/g de HMDA,
- le carbonate de calcium de taille de particule maximale = 100 μm.

Le rapport molaire r3 est calculé de manière bien connue par l'homme du métier à partir des quantités molaires en carbonate de glycérol et en durcisseur(s) possédant au moins deux groups amines primaires ($-NH_2$). En exprimant le nombre de mole(s) de carbonate de glycérol en fonction de la teneur en groupe cyclocarbonate dans le prépolymère (PP2) précédemment calculée ; et le nombre de mole(s) de durcisseur(s) aminé(s) utilisé(s) en fonction de l'alcalinité primaire (méq/g) de ce dernier, on peut écrire :

$$r3 = \frac{t_{cc}\text{ (PP2) x m (PP2)}}{\sum_k [m_k \text{ (durcisseur aminé) x } AP_k \text{ (durciseur aminé)}]}$$

où :

$t_{cc}$ est la teneur calculée en groupe cyclocarbonate dans le prépolymère (PP2) (méq/g) comme définie précédemment,
m (PP2) correspond à la masse de prépolymère (PP2) comme définie précédemment,

APk est l'alcalinité primaire de chaque durcisseur aminé,

$\sum_k[m_k$ (durcisseur aminé)x $AP_k$ (durcisseur aminé)] correspond pour k=1 au produit de la masse du durcisseur aminé utilisé par l'alcalinité primaire dudit durcisseur aminé, et pour k>1 à la somme des produits de la masse de chaque durcisseur aminé utilisé par leur alcalinité primaire respective,

k est un nombre entier supérieur ou égal à 1.

Dans un réacteur en polypropylène placé sous atmosphère d'azote, on chauffe le composant (A) entre 65 et 80°C puis on ajoute le composant (B) constitué du (ou des) durcisseur(s) aminé(s) (B1) et éventuellement de charge, sous agitation. Le mélange est effectué à chaud à la température T3 comprise entre 65 et 80°C et est maintenu sous agitation constante pendant 2 minutes sous vide (pour débullage).

Puis, on laisse agiter le mélange jusqu'à disparition complète des fonctions cyclocarbonates visibles en Infra-Rouge (signal à 1800 $cm^{-1}$).

Mesure des performances mécaniques : résistance et allongement à la rupture des compositions selon l'invention à l'état réticulé

Une fois réticulée, on mesure la résistance et de l'allongement à la rupture par essai de traction de la composition adhésive selon le protocole décrit ci-après.

Le principe de la mesure consiste à étirer dans une machine de traction, dont la mâchoire mobile se déplace à une vitesse constante égale à 100 mm/minute, une éprouvette standard constituée de la composition adhésive réticulée ; et à enregistrer, au moment où se produit la rupture de l'éprouvette, la contrainte de traction appliquée (en MPa) ainsi que l'allongement de l'éprouvette (en %).

L'éprouvette standard est en forme d'haltère, comme illustré dans la norme internationale ISO 37. La partie étroite de l'haltère utilisée a pour longueur 20 mm, pour largeur 4 mm et pour épaisseur 500 $\mu$m.

Pour préparer l'haltère, on chauffe à 95°C la composition conditionnée comme décrit précédemment, puis on extrude sur une feuille A4 de papier siliconé la quantité nécessaire pour former sur celle-ci un film ayant une épaisseur de 500 $\mu$m qui est laissé durant 7 jours à 23°C et 50% d'humidité relative pour réticulation. L'haltère est alors obtenue par simple découpe dans le film réticulé à l'aide d'un emporte-pièce.

Le test de résistance à la traction est répété deux fois et donne les mêmes résultats. La contrainte à la traction appliquée enregistrée est exprimée en Mégapascal (MPa, soit $10^6$ Pa) et l'allongement à la rupture en % par rapport à la longueur initiale de l'éprouvette. Les valeurs sont regroupées dans le tableau 4 ci-dessous.

**Tableau 4**

| | 1' | 2' | 3' | 4' |
|---|---|---|---|---|
| Contrainte de traction appliquée (MPa) | 2,3 | 0,7 | 2,1 | 2,1 |
| Allongement à la rupture (%) | 1825 | 100 | 420 | 640 |

Pouvoir adhésif : Mesure de la force de cisaillement sous contrainte (en anglais Lap Shear)

Les compositions adhésives 1', 3' et 4' selon l'invention ont été soumises par ailleurs à des tests de collage de deux lamelles en aluminium poudré (chacune de taille 100 mm x 25 mm) préalablement nettoyée avec un solvant (isopropanol). On applique la composition adhésive sur une des surfaces des lamelles à l'aide d'une spatule, dans un espace délimité par une fenêtre de 12,5 mm x 25 mm en téflon. On appose par-dessus la surface enduite de colle l'autre lamelle, en pressant les deux lamelles l'une contre l'autre. Après réticulation de sept jours à 23°C et 50% d'humidité relative, on mesure la force de cisaillement à la rupture ainsi que le faciès de rupture.

**Tableau 5**

| | 1' | 3' | 4' |
|---|---|---|---|
| Force de cisaillement à la rupture (MPa) | 1,7 | 0,8 | 0,6 |
| Type de rupture | RA | RA | RA |

On note « RA » pour rupture adhésive, signifiant que l'on observe que la totalité du joint adhésif est resté collé sur l'une des faces des lamelles contrecollées.

Ainsi, les compositions adhésives selon l'invention, peuvent être formulées aisément, à l'aide d'un procédé de préparation peu coûteux en énergie et respectueux de l'homme et de son environnement, ne mettant pas en œuvre de solvant, ni de plastifiant.

En outre, les compositions adhésives selon l'invention ainsi obtenues conduisent à des adhésifs performants en termes de propriétés mécaniques et/ou de force d'adhésion, adaptés à un large panel d'applications.

## Revendications

1. Procédé de préparation d'un prépolymère de polyuréthane à terminaisons (2-oxo-1,3-dioxolan-4-yl)méthyl-carbamate) (PP2) comprenant :

   - dans une première étape (notée E1), la préparation d'un prépolymère de polyuréthane à terminaisons NCO (PP1) par une réaction de polyaddition :

     (i) d'au moins un diisocyanate choisi parmi les diisocyanates aliphatiques ou aromatiques suivants, et leurs mélanges :

     a1) l'isophorone diisocyanate (IPDI),
     a2) le 2,4-toluène diisocyanate (2,4-TDI),
     a3) le 2,4'-diisocyanate de diphénylemethane (2,4'-MDI),

     (ii) avec au moins un polyol choisi parmi les polyéther polyols et les polydiène polyols, à une température de réaction T1 inférieure à 95°C, dans des conditions anhydres, et dans des quantités de diisocyanate(s) et de polyol(s) conduisant à un rapport molaire NCO/OH, noté $r_1$, allant de 1,6 à 1,9 ; puis

   - dans une deuxième étape (notée E2), la réaction dans des conditions anhydres, à une température de réaction T2 inférieure à 95°C du produit formé à la première étape E1 avec au moins un carbonate de glycérol dans une quantité de carbonate de glycérol conduisant à un rapport molaire NCO/OH, noté $r_2$, allant de 0,9 à 1,0,
   - le 2,4-toluène diisocyanate (2,4-TDI) pouvant être utilisé sous la forme d'un mélange de TDI a2) comprenant au moins 99% en poids de 2,4-toluène diisocyanate (2,4-TDI) par rapport au poids total dudit mélange a2), et
   - le 2,4'-diisocyanate de diphénylemethane (2,4'-MDI) pouvant être utilisé sous la forme d'un mélange de MDI a3) comprenant au moins 99% en poids de 2,4'-diisocyanate de diphénylemethane (2,4'-MDI) par rapport au poids total dudit mélange a3).

2. Procédé de préparation selon la revendication 1, **caractérisé en ce que** le rapport $r_1$ va de 1,65 à 1,85.

3. Procédé de préparation selon la revendication 1 ou 2, **caractérisé en ce qu'**il ne comprend pas d'étape consistant à ajouter un ou plusieurs solvant(s) et/ou plastifiant(s).

4. Procédé de préparation selon l'une quelconque des revendications 1 à 3, **caractérisé en ce que** les polyéther polyols sont choisis parmi les polyoxyalkylène polyols, dont la partie alkylène, linéaire ou ramifiée, comprend de 1 à 4 atomes de carbone, et les polybutadiènes comportant des groupes hydroxyles terminaux éventuellement hydrogénés ou époxydés.

5. Procédé de préparation selon l'une quelconque des revendications 1 à 4, **caractérisé en ce que** les polyéther polyols sont choisis parmi les polyoxypropylène diols ou triols avec un indice de polydispersité allant de 1 à 1,4.

6. Procédé de préparation selon l'une quelconque des revendications 1 à 5, **caractérisé en ce que** le(s) polyol(s) est(sont) choisi(s) parmi ceux ayant une masse molaire moyenne en nombre allant de 200 à 20000 g/mol.

7. Procédé de préparation selon l'une quelconque des revendications 1 à 6,, **caractérisé en ce que** le diisocyanate est le 2,4-TDI ou un mélange de TDI a2) tel que défini dans la revendication 1.

8. Prépolymère de polyuréthane à terminaisons (2-oxo-1,3-dioxolan-4-yl)méthyl-carbamate (PP2) susceptible d'être obtenu par le procédé de préparation tel que défini à l'une quelconque des revendications 1 à 7.

9. Système multicomposant comprenant :

   - comme premier composant (noté composant (A)), une composition comprenant au moins un prépolymère de polyuréthane à terminaisons (2-oxo-1,3-dioxolan-4-yl)méthyl-carbamate (PP2) tel que défini dans la revendication 8 et

- comme deuxième composant (noté composant (B)), une composition comprenant au moins un durcisseur possédant au moins deux groupes amine primaire ($-NH_2$) (B1).

**10.** Système multicomposant selon la revendication 9, **caractérisé en ce que** le(s)dit(s) durcisseur(s) (B1) possèdent une alcalinité primaire allant de 0,4 à 34 méq/g de durcisseur.

**11.** Système multicomposant selon la revendication 9 ou 10, **caractérisé en ce que** les groupes amines primaires dudit (desdits) durcisseur(s) (B1) sont des groupes méthylène amine primaire ($-CH_2-NH_2$).

**12.** Système multicomposant selon l'une quelconque des revendications 9 à 11, **caractérisé en ce que** les quantités de prépolymère(s) de polyuréthane à terminaisons (2-oxo-1,3-dioxolan-4-yl)méthyl-carbamate (PP2) et de durcisseur(s) (B1) tel(s) que défini(s) dans la revendications 10 ou 11 présents dans le système multicomposant, conduisent à un rapport molaire du nombre de groupes cyclocarbonate sur le nombre de groupe amine primaire, noté r3, allant de 0,5 à 1.

**13.** Système multicomposant selon l'une quelconque des revendications 9 à 12, **caractérisé en ce qu'**il comprend au moins une charge minérale.

**14.** Procédé d'assemblage de matériaux mettant en œuvre le prépolymère de polyuréthane à terminaisons (2-oxo-1,3-dioxolan-4-yl)méthyl-carbamate (PP2) tel que défini à la revendication 8, comprenant les étapes suivantes :

- le mélange d'au moins un prépolymère de polyuréthane à terminaisons (2-oxo-1,3-dioxolan-4-yl)méthyl-carbamate (PP2) tel que défini à la revendication 8 et d'au moins un durcisseur possédant au moins deux groupes amine primaire ($-NH_2$) (B1) tel que défini dans la revendication 10 à 11, puis
- l'enduction dudit mélange sur la surface d'un premier matériau, puis
- le contrecollage de la surface d'un second matériau sur ladite surface enduite, puis
- la réticulation dudit mélange.

**15.** Utilisation d'un prépolymère de polyuréthane à terminaisons (2-oxo-1,3-dioxolan-4-yl)méthyl-carbamate (PP2) tel que défini à la revendication 8, susceptible d'être obtenu selon le procédé de préparation tel que défini dans l'une quelconque des revendications 1 à 7, pour la fabrication d'une composition adhésive.

## Patentansprüche

**1.** Verfahren zur Herstellung eines Polyurethan-Prepolymers mit (2-Oxo-1,3-dioxolan-4-yl)methyl-carbamat)-Endgruppen (PP2), umfassend:

- in einem ersten Schritt (mit der Bezeichnung E1) die Herstellung eines Polyurethan-Prepolymers mit NCO-Endgruppen (PP1) durch eine Polyadditionsreaktion:

(i) von mindestens einem Diisocyanat, das aus den folgenden aliphatischen oder aromatischen Diisocyanaten und Mischungen davon ausgewählt wird:

a1) Isophorondiisocyanat (IPDI),
a2) 2,4-Toluoldiisocyanat (2,4-TDI),
a3) 2,4'-Diphenylmethandiisocyanat (2,4'-MDI),

(ii) mit mindestens einem Polyol, das aus Polyetherpolyolen und Polydienpolyolen ausgewählt ist, bei einer Reaktionstemperatur T1 von weniger als 95 °C unter wasserfreien Bedingungen und mit Mengen von Diisocyanat(en) und Polyol(en), die zu einem NCO/OH-Molverhältnis mit der Bezeichnung $r_1$ im Bereich von 1,6 bis 1,9 führt; dann

- in einem zweiten Schritt (mit der Bezeichnung E2) die Umsetzung des im ersten Schritt E1 gebildeten Produkts unter wasserfreien Bedingungen bei einer Reaktionstemperatur T2 von weniger als 95 °C mit mindestens einem Glycerincarbonat in einer Glycerincarbonat-Menge, die zu einem NCO/OH-Molverhältnis mit der Bezeichnung $r_2$ im Bereich von 0,9 bis 1,0 führt,

- wobei das 2,4-Toluoldiisocyanat (2,4-TDI) in Form eines TDI-Gemischs a2), das mindestens 99 Gew.-% 2,4-Toluoldiisocyanat (2,4-TDI), bezogen auf das Gesamtgewicht des Gemischs a2), umfasst, verwendet werden kann und
- wobei das 2,4'-Diphenylmethandiisocyanat (2,4'-MDI) in Form eines MDI-Gemischs a3), das mindestens 99 Gew.-% 2,4'-Diphenylmethandiisocyanat (2,4'-MDI), bezogen auf das Gesamtgewicht des Gemischs a3), umfasst, verwendet werden kann.

**2.** Herstellungsverfahren nach Anspruch 1, **dadurch gekennzeichnet, dass** das Verhältnis $r_1$ im Bereich von 1,65 bis 1,85 liegt.

**3.** Herstellungsverfahren nach Anspruch 1 oder 2, **dadurch gekennzeichnet, dass** es keinen Schritt umfasst, der in der Zugabe eines oder mehrerer Lösungsmittel und/oder Weichmacher besteht.

**4.** Herstellungsverfahren nach einem der Ansprüche 1 bis 3, **dadurch gekennzeichnet, dass** die Polyetherpolyole aus Polyoxyalkylenpolyolen, deren linearer oder verzweigter Alkylenteil 1 bis 4 Kohlenstoffatome umfasst, und Polybutadienen mit endständigen Hydroxylgruppen, die gegebenenfalls hydriert oder epoxidiert sind, ausgewählt werden.

**5.** Herstellungsverfahren nach einem der Ansprüche 1 bis 4, **dadurch gekennzeichnet, dass** die Polyetherpolyole aus Polyoxypropylendiolen oder -triolen mit einem Polydispersitätsindex im Bereich von 1 bis 1,4 ausgewählt werden.

**6.** Herstellungsverfahren nach einem der Ansprüche 1 bis 5, **dadurch gekennzeichnet, dass** das Polyol bzw. die Polyole aus denjenigen mit einer zahlenmittleren Molmasse im Bereich von 200 bis 20.000 g/mol ausgewählt wird bzw. werden.

**7.** Herstellungsverfahren nach einem der Ansprüche 1 bis 6, **dadurch gekennzeichnet, dass** es sich bei dem Diisocyanat um 2,4-TDI oder ein TDI-Gemisch a2) gemäß Anspruch 1 handelt.

**8.** Polyurethan-Prepolymer mit (2-Oxo-1,3-dioxolan-4-yl)methylcarbamat)-Endgruppen (PP2), das durch das Herstellungsverfahren gemäß einem der Ansprüche 1 bis 7 erhältlich ist.

**9.** Mehrkomponentensystem, umfassend:

- als erste Komponente (mit der Bezeichnung Komponente (A)) eine Zusammensetzung, die mindestens ein Polyurethan-Prepolymer mit (2-Oxo-1,3-dioxolan-4-yl)methylcarbamat)-Endgruppen (PP2) gemäß Anspruch 8 umfasst, und
- als zweite Komponente (mit der Bezeichnung Komponente (B)) eine Zusammensetzung, die mindestens einen Härter mit mindestens zwei primären Amingruppen ($-NH_2$) (B1) umfasst.

**10.** Mehrkomponentensystem nach Anspruch 9, **dadurch gekennzeichnet, dass** der Härter bzw. die Härter (B1) eine primäre Alkalinität im Bereich von 0,4 bis 34 meq/g Härter aufweisen.

**11.** Mehrkomponentensystem nach Anspruch 9 oder 10, **dadurch gekennzeichnet, dass** es sich bei den primären Amingruppen des Härters bzw. der Härter (B1) um primäre Methylenamingruppen ($-CH_2-NH_2$) handelt.

**12.** Mehrkomponentensystem nach einem der Ansprüche 9 bis 11, **dadurch gekennzeichnet, dass** die Mengen von Polyurethan-Prepolymer(en) mit (2-Oxo-1,3-dioxolan-4-yl)methylcarbamat)-Endgruppen (PP2) und Härter (n) (B1) gemäß Anspruch 10 oder 11, die in dem Mehrkomponentensystem vorliegen, zu einem Molverhältnis der Zahl von Cyclocarbonatgruppen zur Zahl von primären Amingruppen mit der Bezeichnung $r_3$ im Bereich von 0,5 bis 1 führen.

**13.** Mehrkomponentensystem nach einem der Ansprüche 9 bis 12, **dadurch gekennzeichnet, dass** es mindestens einen anorganischen Füllstoff umfasst.

**14.** Verfahren zum Zusammenbauen von Materialien unter Verwendung des Polyurethan-Prepolymers mit (2-Oxo-1,3-dioxolan-4-yl)methylcarbamat)-Endgruppen (PP2) gemäß Anspruch 8, das die folgenden Schritte umfasst:

- das Mischen von mindestens einem Polyurethan-Prepolymer mit (2-Oxo-1,3-dioxolan-4-yl)methyl-carbamat)-Endgruppen (PP2) gemäß Anspruch 8 und mindestens einem Härter mit mindestens zwei primären Amin-

gruppen ($-NH_2$) (B1) gemäß Anspruch 10 bis 11, dann
- Beschichten der Oberfläche eines ersten Materials mit der Mischung, dann
- Aufkaschieren der Oberfläche eines zweiten Materials auf die beschichtete Oberfläche, dann
- Vernetzen der Mischung.

**15.** Verwendung eines Polyurethan-Prepolymers mit (2-Oxo-1,3-dioxolan-4-yl)methylcarbamat)-Endgruppen (PP2) gemäß Anspruch 8, das nach dem Herstellungsverfahren gemäß einem der Ansprüche 1 bis 7 erhältlich ist, zur Herstellung einer Klebstoffzusammensetzung.

**Claims**

**1.** Process for the preparation of a polyurethane prepolymer having (2-oxo-1,3-dioxolan-4-yl)methyl carbamate end groups (PP2) comprising:

- in a first stage (denoted E1), the preparation of a polyurethane prepolymer having NCO end groups (PP1) by a polyaddition reaction:

(i) of at least one diisocyanate chosen from the following aliphatic or aromatic diisocyanates, and their mixtures:

a1) isophorone diisocyanate (IPDI),
a2) toluene-2,4-diisocyanate (2,4-TDI),
a3) diphenylmethane-2,4'-diisocyanate (2,4'-MDI),

(ii) with at least one polyol chosen from polyether polyols and polydiene polyols, at a reaction temperature T1 of less than 95°C, under anhydrous conditions and in amounts of diisocyanate(s) and of polyol(s) resulting in an NCO/OH molar ratio, denoted $r_1$, ranging from 1.6 to 1.9; then

- in a second stage (denoted E2), the reaction, under anhydrous conditions, at a reaction temperature T2 of less than 95°C, of the product formed in the first stage E1 with at least one glycerol carbonate in an amount of glycerol carbonate resulting in an NCO/OH molar ratio, denoted $r_2$, ranging from 0.9 to 1.0,
- it being possible for the toluene-2,4-diisocyanate (2,4-TDI) to be used in the form of a TDI mixture a2) comprising at least 99% by weight of toluene-2,4-diisocyanate (2,4-TDI), with respect to the total weight of said mixture a2), and
- it being possible for the diphenylmethane-2,4'-diisocyanate (2,4'-MDI) to be used in the form of an MDI mixture a3) comprising at least 99% by weight of diphenylmethane-2,4'-diisocyanate (2,4'-MDI), with respect to the total weight of said mixture a3).

**2.** Preparation process according to Claim 1, **characterized in that** the ratio $r_1$ ranges from 1.65 to 1.85.

**3.** Preparation process according to Claim 1 or 2, **characterized in that** it does not comprise a stage consisting in adding one or more solvent(s) and/or plasticizer(s) .

**4.** Preparation process according to any one of Claims 1 to 3, **characterized in that** the polyether polyols are chosen from polyoxyalkylene polyols, the linear or branched alkylene part of which comprises from 1 to 4 carbon atoms, and polybutadienes comprising terminal hydroxyl groups which are optionally hydrogenated or epoxidized.

**5.** Preparation process according to any one of Claims 1 to 4, **characterized in that** the polyether polyols are chosen from polyoxypropylene diols or triols with a polydispersity index ranging from 1 to 1.4.

**6.** Preparation process according to any one of Claims 1 to 5, **characterized in that** the polyol(s) is (are) chosen from those having a number-average molar mass ranging from 200 to 20 000 g/mol.

**7.** Preparation process according to any one of Claims 1 to 6, **characterized in that** the diisocyanate is 2,4-TDI or a TDI mixture a2) as defined in Claim 1.

**8.** Polyurethane prepolymer having (2-oxo-1,3-dioxolan-4-yl)methyl carbamate end groups (PP2), capable of being

obtained by the preparation process as defined in any one of Claims 1 to 7.

**9.** Multicomponent system, comprising:

- as first component (denoted component (A)), a composition comprising at least one polyurethane prepolymer having (2-oxo-1,3-dioxolan-4-yl)methyl carbamate end groups (PP2), as defined in Claim 8, and
- as second component (denoted component (B)), a composition comprising at least one curing agent having at least two primary amine ($-NH_2$) groups (B1).

**10.** Multicomponent system according to Claim 9, **characterized in that** said curing agent(s) (B1) have a primary alkalinity ranging from 0.4 to 34 meq/g of curing agent.

**11.** Multicomponent system according to Claim 9 or 10, **characterized in that** the primary amine groups of said curing agent(s) (B1) are methylene(primary amine) ($-CH_2-NH_2$) groups.

**12.** Multicomponent system according to any one of Claims 9 to 11, **characterized in that** the amounts of polyurethane prepolymer(s) having (2-oxo-1,3-dioxolan-4-yl)methyl carbamate end groups (PP2) and of curing agent(s) (B1) as defined in Claim 10 or 11 present in the multicomponent system result in a molar ratio of the number of cyclocarbonate groups to the number of primary amine groups, denoted $r_3$, ranging from 0.5 to 1.

**13.** Multicomponent system according to any one of Claims 9 to 12, **characterized in that** it comprises at least one inorganic filler.

**14.** Process for assembling materials employing the polyurethane prepolymer having (2-oxo-1,3-dioxolan-4-yl)methyl carbamate end groups (PP2) as defined in Claim 8, comprising the following stages:

- the mixing of at least one polyurethane prepolymer having (2-oxo-1,3-dioxolan-4-yl)methyl carbamate end groups (PP2) as defined in Claim 8 and of at least one curing agent having at least two primary amine ($-NH_2$) groups (B1) as defined in Claims 10 to 11, then
- the coating of said mixture onto the surface of a first material, then
- the laminating of the surface of a second material onto said coated surface, then
- the crosslinking of said mixture.

**15.** Use of a polyurethane prepolymer having (2-oxo-1,3-dioxolan-4-yl)methyl carbamate end groups (PP2) as defined in Claim 8, capable of being obtained according to the preparation process as defined in any one of Claims 1 to 7, in the manufacture of an adhesive composition.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 20070151666 A